# EUROPEAN PATENT APPLICATION

(11) **EP 4 535 533 A1**
(43) Date of publication of application: **09.04.2025**
(21) Application number: 23811181.9
(22) Date of filing: 26.05.2023
(51) Int. Cl.: H01M 50/244, H01M 50/264, B60L 53/80, B60K 1/04

(54) **LOCKING APPARATUS AND VEHICLE**

(30) Priority: 27.05.2022 CN 202221301459 U
(71) Applicant: Sichuan Zhili Intelligent Energy Technology Co., Ltd., Yibin, Sichuan 644005 (CN)
(72) Inventor: LI, Liguo, Yibin, Sichuan 644005 (CN); HONG, Munan, Yibin, Sichuan 644005 (CN)
(74) Representative: Studio Torta S.p.A.
(86) International application number: PCT/CN2023/096559
(87) International publication number: WO 2023/227111

(57) **Abstract**

Provided are a locking device and a vehicle. The locking device includes a base (1), a pressing block (2), and a driving unit (3); where the pressing block (2) is pivoted with the base (1); the driving unit (3) includes a driving source and a connection rod assembly (32), the driving source is fixedly disposed at the base (1), and the connection rod assembly is connected between the pressing block (2) and the driving source; and the driving source drives the connection rod assembly (32) to move, so as to drive the pressing block (2) to rotate about a pivot shaft between the pressing block (2) and the base (1), so that the pressing block (2) selectively presses or disengages from a member to be locked. According to the locking device, the driving source drives the connection rod assembly, so as to drive the pressing block to move. Compared with the prior art, a locking force is enhanced, and the compatibility with other apparatuses is improved; and the driving source is fixedly arranged at the base, so that the locking device has a more compact structure and occupies a smaller space. By applying the locking device to the vehicle, the layout of the vehicle is optimized, and the safety is higher.

## Description

The disclosure claims the priority to Patent Application No. 202221301459.1, filed with the China National Intellectual Property Administration on May 27, 2022 and entitled "Locking device and vehicle".

### Technical Field

The disclosure relates to the technical field of vehicles, and in particular to a locking device and a vehicle.

### Background

In a battery swap mode of electric vehicles, storage and charging of a large number of batteries are centralized in a centralized charging station, and battery swap operations of the electric vehicles is completed in a battery swap station. In this way, a charging wait time can be shortened while a battery swap and maintenance cost can be lowered.

In an existing battery-swappable heavy truck, it is common practice to lock a battery to be swapped to a battery swap base of a truck body by means of a pin type locking mechanism. But the pin type locking mechanism has the following problems:
1) It has undesirable compatibility with a height, and a small locking force.
2) An air cylinder is mounted generally through a hinge, so as to drive components of the locking mechanism to rotate. However, locking the battery to be swapped to the battery swap base leads to a complex structure and a large occupied space.

### Summary

A primary objective of the disclosure is to provide a locking device and a vehicle, so that a compact structure, a small occupied space, higher mounting performance, and a wide application range are realized.

In order to realize the above objective, the technical solution is provided as follows:
In one aspect, a locking device is provided. The locking device includes:
a base;
a pressing block, where the pressing block is pivoted with the base; and
a driving unit, where the driving unit includes a driving source and a connection rod assembly, the driving source is fixedly disposed at the base, and the connection rod assembly is connected between the pressing block and the driving source; and the driving source drives the connection rod assembly to move, so as to drive the pressing block to rotate about a pivot shaft between the pressing block and the base, so that the pressing block selectively presses against or disengages from a member to be locked.

As an optional solution of the locking device, the driving source includes an elastic member and an unlocking unit, the elastic member is connected with the connection rod assembly, and the unlocking unit is connected with the elastic member; and by means of an elastic restoring force of the elastic member, the connection rod assembly drives the pressing block to maintain a pressing force on the member to be locked, and the unlocking unit is configured to offset the pressing force of the elastic member and compress the elastic member, so that the pressing block disengages from the member to be locked.

As an optional solution of the locking device, two connection rod assemblies are provided, the two connection rod assemblies are symmetrically disposed on two sides of the pressing block respectively, and the driving source is connected with the two connection rod assemblies, so that the driving source drives the two connection rod assemblies to act synchronously.

As an optional solution of the locking device, the locking device further includes an adapter push rod, the adapter push rod includes a first adapter end and second adapter ends disposed corresponding one-to-one to the two connection rod assemblies, the first adapter end is fixedly connected with an action end of the driving source, and the two second adapter ends are pivoted with the corresponding connection rod assemblies.

As an optional solution of the locking device, the adapter push rod is of a U-shaped structure, the first adapter end is disposed at a bottom end of the U-shaped structure, and the second adapter ends are disposed at tops of two ends of an opening of the U-shaped structure.

As an optional solution of the locking device, the connection rod assembly includes:
a first connection rod, where the first connection rod includes a first end, a second end, and a third end that are sequentially disposed along a triangular track, the first end is pivoted with the base, and the second end is pivoted with the second corresponding adapter end; and
a second connection rod, where one end of the second connection rod is pivoted with the third end, and the other end of the second connection rod is pivoted with the pressing block.

As an optional solution of the locking device, the driving unit further includes a first connection shaft, and two ends of the first connection shaft penetrate one ends of the second connection rods of the two connection rod assemblies and then are pivoted with the first connection rods of the two connection rod assemblies respectively.

As an optional solution of the locking device, the base includes support frames disposed corresponding one-to-one to the two connection rod assemblies, the first ends are pivoted with the corresponding support frames, and the support frames are of an inverted U-shaped structure; and the second adapter ends of the adapter push rod extend out of U-shaped openings of the corresponding support frames, so as to be pivoted with the second ends of the first corresponding connection rods.

As an optional solution of the locking device, the base includes a locating seat body and a mounting seat body connected with one side of the locating seat body, an included angle is formed between the locating seat body and the mounting seat body, and the included angle is an obtuse angle; and
the driving source is fixedly disposed on one side, facing away from the pressing block, of the mounting seat body, and an axis of the driving source is perpendicular to the mounting seat body.

The adapter push rod includes a first rod body, a second rod body, and a third rod body that are sequentially connected, and the first rod body and the third rod body are oppositely disposed; and the first adapter end is disposed in a middle of the second rod body, and the two second adapter ends are disposed at one end, away from the second rod body, of the first rod body, and one end, away from the second rod body, of the third rod body separately.

The first rod body, the second rod body, and the third rod body are of an integrally-formed U-shaped structure.

The pressing block is provided with a middle shaft hole, and the driving unit further includes: a second connection shaft, the second connection shaft is disposed in the middle shaft hole in a penetrating manner, and two ends of the second connection shaft are pivoted with the second connection rods of the two connection rod assemblies respectively.

The pressing block is provided with a tail-end shaft hole, a mounting hinge pin is disposed in the tail-end shaft hole in a penetrating manner, and two ends of the mounting hinge pin are pivoted to the two support frames respectively.

The driving source includes a push rod, the push rod is telescopically disposed, the push rod is in driving connection with the connection rod assemblies, and the push rod drives the connection rod assemblies to move; and the mounting seat body is provided with a through hole, and at least part of the push rod penetrates the through hole, so as to be connected with the connection rod assemblies.

The base includes: a locating seat body; and a mounting seat body, the mounting seat body is disposed at an end portion of the locating seat body, an included angle is formed between the mounting seat body and the locating seat body, and the driving unit is disposed on the mounting seat body.

The driving unit includes the driving source, and the driving source is in driving connection with the connection rod assemblies; and the mounting seat body includes a first bearing end surface and a second bearing end surface that are oppositely disposed, the connection rod assemblies are disposed on the first bearing end surface, and at least part of the driving source is disposed on the second bearing end surface.

The driving source includes a push rod, the push rod is telescopically disposed, the push rod is in driving connection with the connection rod assemblies, and the push rod drives the connection rod assemblies to move; and the mounting seat body is provided with a through hole, and at least part of the push rod penetrates the through hole, so as to be connected with the connection rod assemblies.

The mounting seat body includes a bearing plate body, the first bearing end surface and the second bearing end surface are disposed on the bearing plate body, the bearing plate body is connected with the end portion of the locating seat body, and the included angle is formed between the bearing plate body and the locating seat body; and protecting plate bodies, two protecting plate bodies are provided, the two protecting plate bodies are arranged at two ends of the bearing plate body respectively, a mounting space is formed between the two protecting plate bodies, and at least part of the driving source is positioned in the mounting space.

The locating seat body includes a first seat body, a second seat body, and a third seat body that are sequentially connected, and included angles are formed between the first seat body and the mounting seat body as well as between the third seat body and the mounting seat body separately; and the first seat body and the third seat body are oppositely arranged, so as to delimit a weight reduction space among the first seat body, the second seat body, and the third seat body.

In another aspect, a vehicle is provided. The vehicle includes any locking device described as above; where the vehicle further includes a battery to be swapped and a battery swap base; and a driving source drives a pressing block to rotate about a pivot shaft between the pressing block and a base, so that the pressing block selectively presses the battery to be swapped against the battery swap base.

Compared with the prior art, the disclosure has the beneficial effects as follows:
According to the locking device of the disclosure, the driving source drives the connection rod assemblies to drive the pressing block to move. Compared with the prior art, a locking force is enhanced, and the compatibility with other apparatuses is improved; and the driving source is fixedly arranged at the base, so that the locking device has a more compact structure and occupies a smaller space.

By applying the above locking device to the vehicle of the disclosure, the layout of the vehicle is optimized, and the safety is higher.

### Brief Description of the Drawings

The drawings of the description are used for providing further understanding of the disclosure as a constituent part of the disclosure. Illustrative examples of the disclosure and their descriptions serve to explain the disclosure, instead of limiting the disclosure improperly. In the accompanying drawings:
Fig. 1 illustrates a first schematic structural diagram of a locking device according to an example of the disclosure;
Fig. 2 illustrates a second schematic structural diagram of a locking device according to an example of the disclosure;
Fig. 3 illustrates a third schematic structural diagram of a locking device according to an example of the disclosure;
Fig. 4 illustrates a sectional view of the locking device in Fig. 3 along a plane A-A;
Fig. 5 illustrates a fourth schematic structural diagram of a locking device according to an example of the disclosure;
Fig. 6 illustrates a first schematic structural diagram of a base of a locking device according to an example of the disclosure;
Fig. 7 illustrates a second schematic structural diagram of a base of a locking device according to an example of the disclosure; and
Fig. 8 illustrates a third schematic structural diagram of a base of a locking device according to an example of the disclosure.

The above accompanying drawings include the reference numerals as follows:
100. battery to be swapped; 200. battery swap base;
1. base; 11. support frame; 12. locating seat body; 121. weight reduction groove; and 13. mounting seat body;
2. pressing block; 21. tail-end shaft hole; 22. middle shaft hole; and 23. mounting hinge pin;
3. driving unit; 31. air brake chamber; 311. push rod; 32. connection rod assembly; 321. first connection rod; 3211, first end; 3212. second end; 3213. third end; 3214. first shaft hole; 3215. second shaft hole; 3216. third shaft hole; 3217. first hinge pin; 3218. second hinge pin; 322. second connection rod; 3221. fourth shaft hole; 3222. fifth shaft hole; 33. first connection shaft; and 34. second connection shaft; and
4. adapter push rod; 41. first adapter end; and 42. second adapter end.

### Detailed Description of the Embodiments

In order to make the objectives, technical solutions, and advantages in examples of the disclosure clearer, the technical solutions in the examples of the disclosure are clearly and completely described below with reference to the accompanying drawings in the examples of the disclosure. Apparently, the examples described are some examples rather than all examples of the disclosure. Components in the examples of the disclosure generally described and shown in the accompanying drawings herein can be arranged and designed based on a variety of different configurations.

Thus, the following detailed description of the examples of the disclosure provided in the accompanying drawings is not intended to limit the scope of the disclosure claimed, and merely indicates the selected examples of the disclosure. Based on the examples of the disclosure, all other examples derived by those of ordinary skill in the art without creative efforts fall within the scope of protection of the disclosure.

It should be noted that similar numerals and letters denote similar items in the following accompanying drawings. Thus, once an item is defined in one accompanying drawing, it is not required to be defined and explained further in subsequent accompanying drawings.

In the description of the disclosure, it should be noted that the orientation or position relations indicated by the terms "upper", "lower", "left", "right", "perpendicular", "horizontal", "inner", "outer", etc. are based on the orientation or position relations shown in the accompanying drawings or the orientation or position relations used for customary placement of a product of the utility model when in use, are merely for facilitating the description of the disclosure and simplifying the description, rather than indicating or implying that the device or element referred to must have a particular orientation or be constructed and operated in a particular orientation, and thus cannot be interpreted as limiting the disclosure. In addition, the terms "first", "second", "third", etc. are merely for differentiated description, and cannot be interpreted as indicating or implying relative importance. In the description of the disclosure, "a plurality of" indicates two or more, unless stated otherwise.

In the description of the disclosure, it should also be noted that the terms "arranged", "connected", and "connection" should be understood in a broad sense, unless clearly specified and limited otherwise. For example, they can indicate fixed connection, detachable connection, integral connection, mechanical connection, and electrical connection. For those of ordinary skill in the art, the specific meanings of the above terms in the disclosure can be understood according to specific circumstances.

In the disclosure, a first feature is "on" or "underneath" a second feature can include that the first feature and the second feature are in direct contact, or in indirect contact through another feature therebetween, unless clearly specified and limited otherwise. Moreover, the first feature is "on", "above", and "over" the second feature includes that the first feature is right above or obliquely above the second feature, or merely indicates that the first feature has a higher level than the second feature. The first feature is "underneath", "below", and "under" the second feature includes that the first feature is right below or obliquely below the second feature, or merely indicates that the first feature has a lower level than the second feature.

The examples of the disclosure are described in detail below, and illustratively shown in the accompanying drawings. The same or similar reference numerals denote the same or similar elements or elements having the same or similar functions throughout. The examples described below with reference to the accompanying drawings are illustrative, and are merely intended to explain the disclosure, but cannot be interpreted as limiting the disclosure.

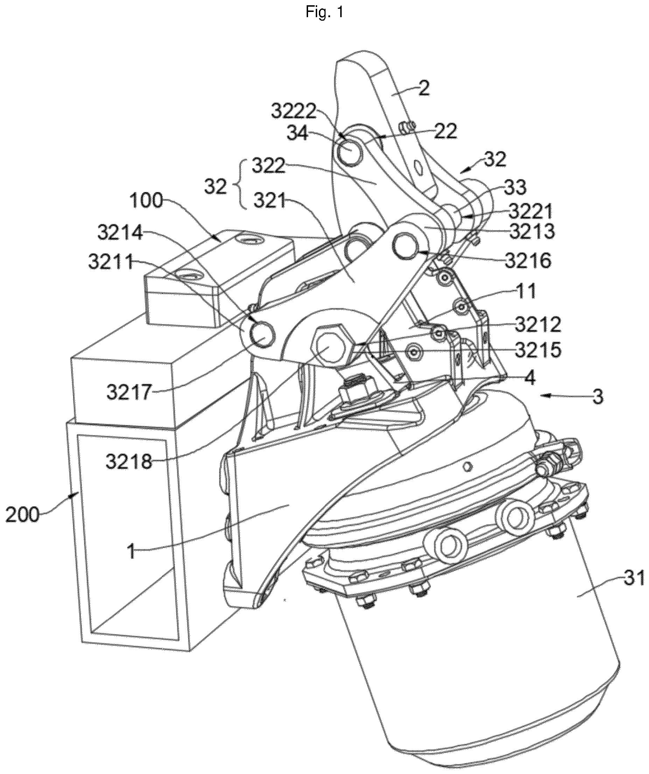

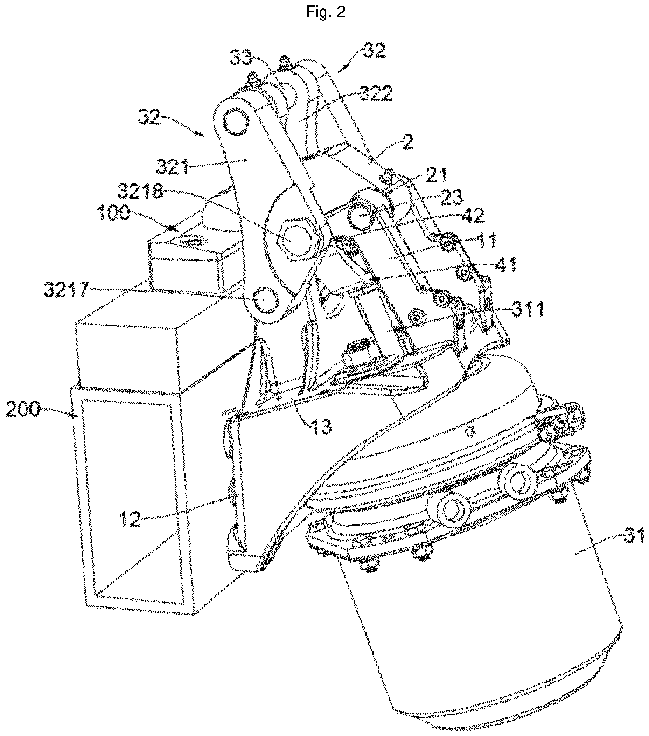

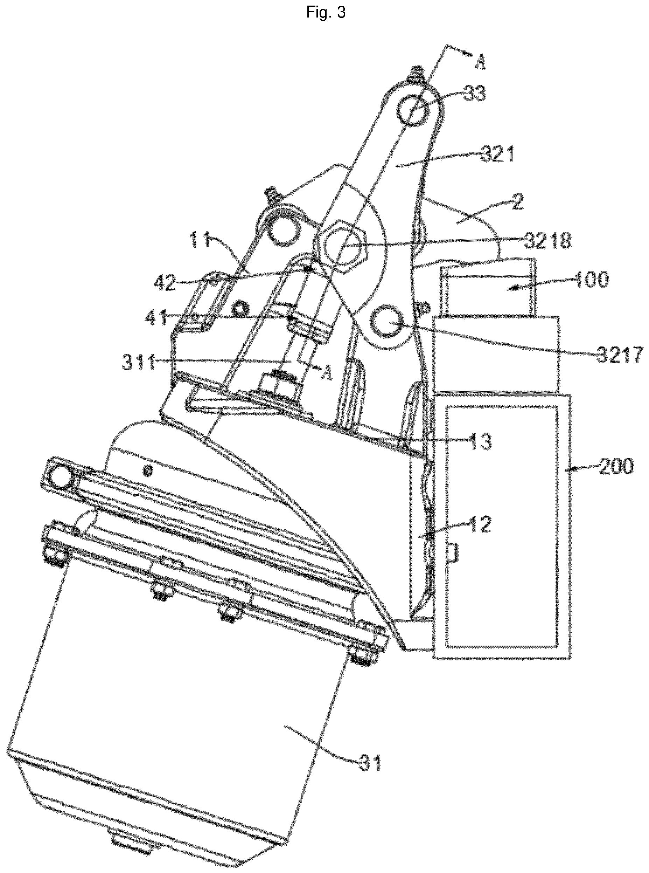

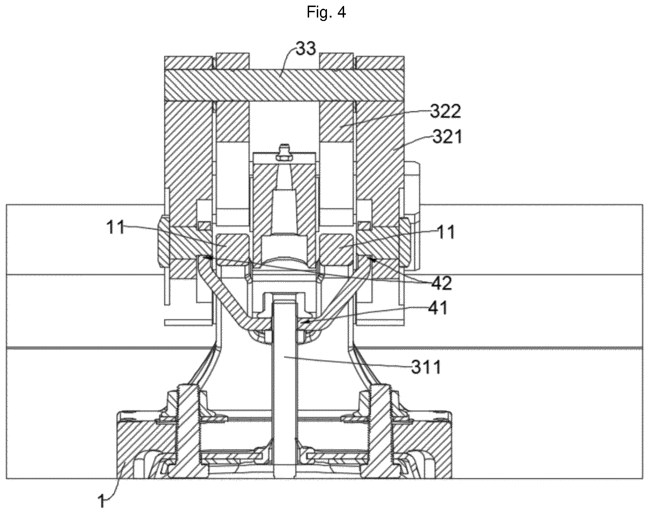

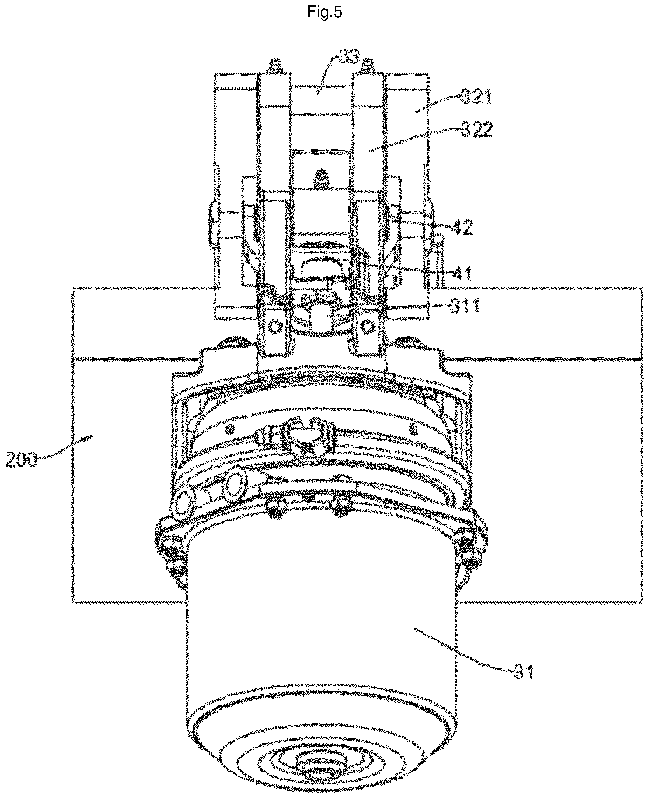

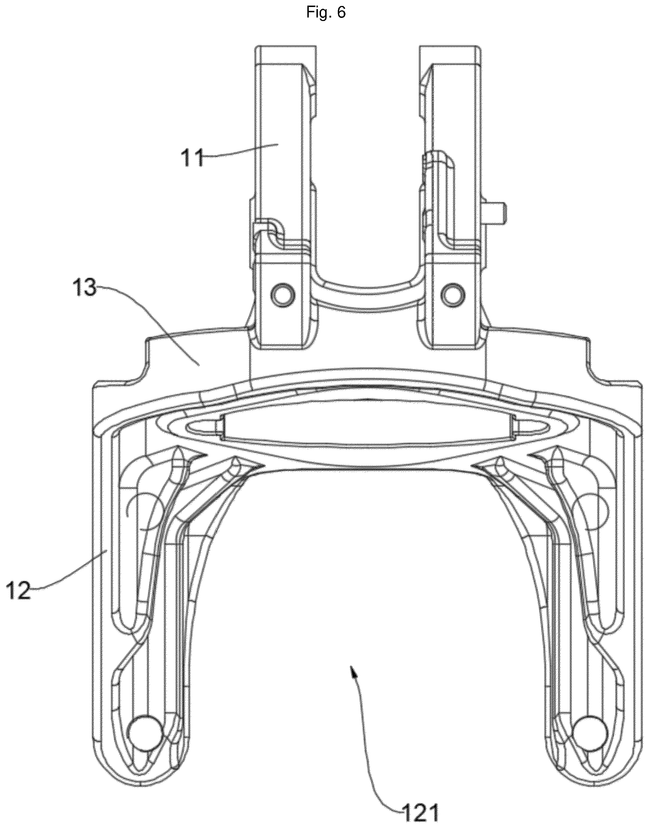

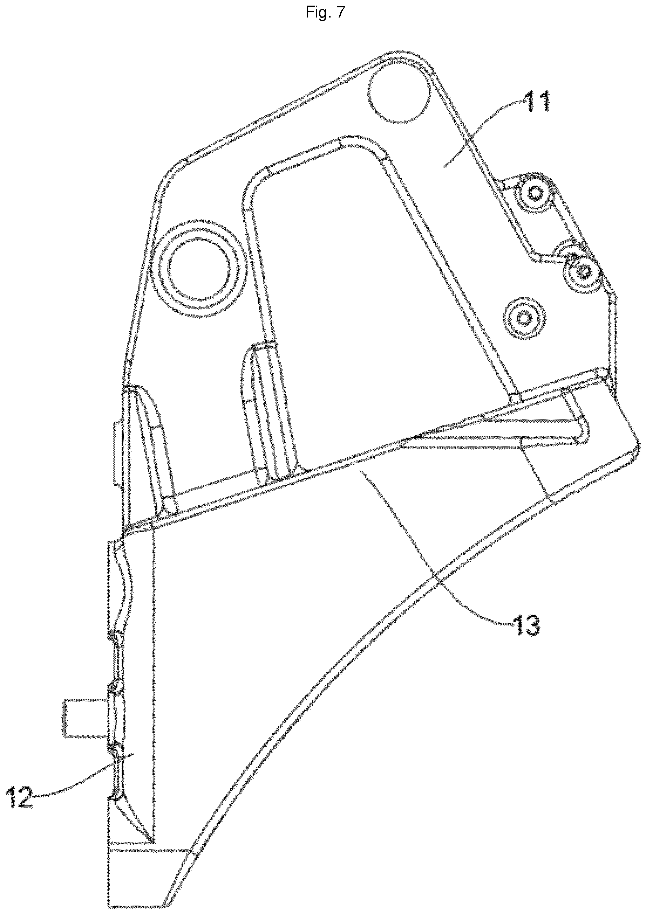

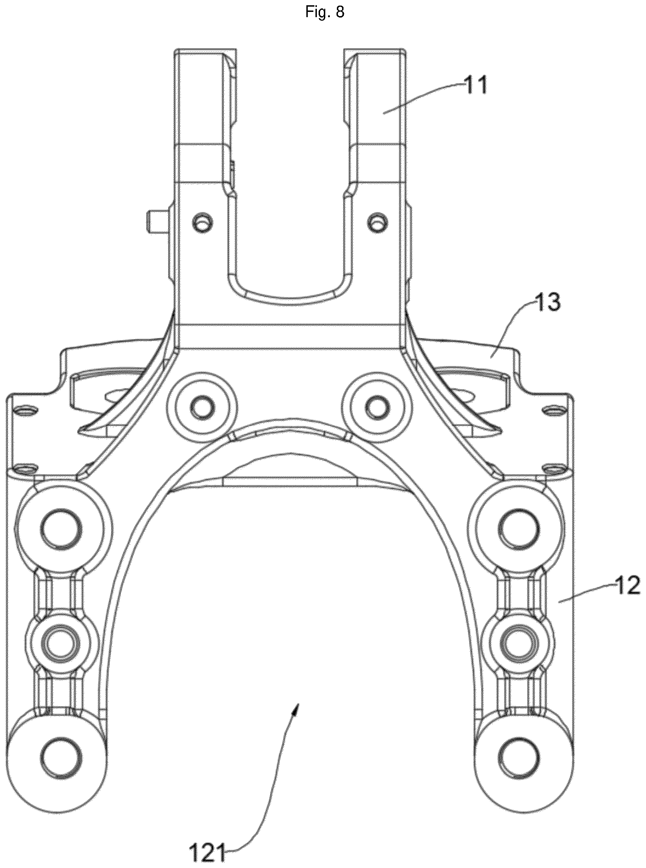

As shown in Figs. 1-8, a locking device is provided in the example. The locking device includes a base 1, a pressing block 2, and a driving unit 3; where the pressing block 2 is pivoted with the base 1; the driving unit 3 includes a driving source and a connection rod assembly 32, the driving source is fixedly disposed at the base 1, and the connection rod assembly 32 is connected between the pressing block 2 and the driving source; and the driving source drives the connection rod assembly 32 to move, so as to drive the pressing block 2 to rotate about a pivot shaft between the pressing block and the base 1, so that the pressing block 2 selectively presses or disengages from a member to be locked.

The driving source drives the connection rod assembly 32 to drive the pressing block 2 to move. Compared with the prior art, a locking force is enhanced, and the compatibility with other apparatuses is improved; and the driving source is fixedly disposed at the base 1, so that the locking device has a more compact structure and occupies a smaller space.

In some embodiment, the driving source includes an elastic member and an unlocking unit, the elastic member is configured for pressing and maintaining a pressing force on the member to be locked; and the unlocking unit is configured to offset the pressing force of the elastic member and compress the elastic member, so that the pressing block 2 disengages from the member to be locked. Illustratively, the elastic member is a compression spring. Certainly, the elastic member is also be a compressible air bag, etc. that can be elastically deformed and automatically reset.

The elastic member is configured for pressing and maintaining the pressing force on the member to be locked; and the unlocking unit is configured to offset the pressing force of the elastic member and compress the elastic member, so that the pressing block 2 disengages from the member to be locked. Compared with a case that an air cylinder is used as a driving source, the problem that the locking device loses a locking function in the absence of an air source is solved, and potential safety hazards are eliminated.

In the example, the driving source is specifically an air brake chamber 31, and a structure of the air brake chamber 31 is as that in the prior art, and will not be repeated herein. It should be noted that the elastic member is a built-in spring inside the air brake chamber 31, the unlocking unit indicates the air source (not shown) and related pipeline accessories, and an air inlet of the air brake chamber 31 is connected with the air source. When the air source supplies air with a certain pressure into the air brake chamber 31, the elastic member is compressed under the action of the air pressure. In this case, a push rod 311 of the air brake chamber 31 drives the connection rod assembly 32, so as to drive the pressing block 2 to rotate, so that the pressing block 2 disengages from the member to be locked. When the air source stops supplying pressure air into the air brake chamber 31, the elastic member is automatically reset. In this case, the push rod 311 of the air brake chamber 31 drives the connection rod assembly 32 to drive the pressing block 2 to rotate, so that the pressing block 2 presses against the member to be locked. With such an arrangement, even when the air source is accidentally interrupted, the locking device can still lock the member to be locked, and thus has higher safety.

It should be noted that in the example, the air brake chamber 31 is fixedly disposed at the base 1, and the push rod 311 of the air brake chamber 31 is connected with the compression spring of the air brake chamber 31. The push rod 311 is extended under the action of an elastic force of the compression spring, so as to provide a driving force. Moreover, the compression spring is elastically deformed, so that the push rod 311 swings within an angle range of ±6°, and thus has high adaptability.

In some embodiment, two connection rod assemblies 32 are provided, and the two connection rod assemblies 32 are symmetrically arranged on two sides of the pressing block 2 respectively, and the driving source is connected with the two connection rod assemblies 32, so that the driving source drives the two connection rod assemblies 32 to act synchronously. Accordingly, an overall bearing capacity and rigidity of the locking device can be improved, so that the locking force can be enhanced, and the service life can be prolonged.

n some embodiment, the locking device further includes an adapter push rod 4, the adapter push rod 4 includes a first adapter end 41 and second adapter ends 42 disposed corresponding one-to-one to the two connection rod assemblies 32, and the first adapter end 41 is fixedly connected with an action end of the driving source. In the example, the action end of the driving source is the push rod 311 of the air brake chamber 31, and the second adapter ends 42 are pivoted with the corresponding connection rod assemblies 32, so that the two connection rod assemblies 32 are driven to act synchronously through one adapter push rod 4.

In the example, the adapter push rod 4 is of a U-shaped structure, the first adapter end 41 is disposed at a bottom end of the U-shaped structure, and the second adapter ends 42 are disposed at tops of two ends of an opening of the U-shaped structure. The adapter push rod 4 of the U-shaped structure is disposed matching the two connection rod assemblies 32, so that transmission of the connection rod assemblies 32 can be stabler, the overall bearing capacity and rigidity of the locking device can be improved, and the locking force can be enhanced accordingly.

Specifically, the adapter push rod 4 includes a first rod body, a second rod body, and a third rod body that are sequentially connected, and the first rod body and the third rod body are oppositely disposed; and the first adapter end 41 is disposed in a middle of the second rod body, and the two second adapter ends 42 are disposed at one end, away from the second rod body, of the first rod body and one end, away from the second rod body, of the third rod body separately. The first rod body, the second rod body, and the third rod body are of an integrally-formed U-shaped structure.

In some embodiment, the connection rod assembly 32 includes a first connection rod 321 and a second connection rod 322; the first connection rod 321 includes a first end 3211, a second end 3212, and a third end 3213 that are sequentially disposed along a triangular track, the first end 3211 is pivoted with the base 1, and the second end 3212 is pivoted with the second corresponding adapter end 42; and one end of the second connection rod 322 is pivoted with the third end 3213, and the other end of the second connection rod is pivoted with the pressing block 2. Compared with the prior art, in the example, the air brake chamber 31 is used to drive the connection rod assemblies 32, so as to drive the pressing block 2 to rotate, and the air brake chamber 31 is fixedly disposed at the base 1, so that the structure is simplified, and the occupied space is narrowed.

In some embodiment, the driving unit 3 further includes a first connection shaft 33, and two ends of the first connection shaft 33 penetrate one ends of the second connection rods 322 of the two connection rod assemblies 32 and then are pivoted with the first connection rods of the two connection rod assemblies 32 respectively. The two connection rod assemblies 32 are connected through the first connection shaft 33. Accordingly, the overall structural strength and bearing capacity are improved while synchronization of the two connection rod assemblies 32 is ensured.

In some embodiment, the driving unit 3 further includes a second connection shaft 34, the second connection shaft 34 is disposed in the pressing block 2 in a penetrating manner, and two ends of the second connection shaft 34 are pivoted with the second connection rods 322 of the two connection rod assemblies 32 respectively. Accordingly, the manufacturability is desirable, the second connection rods 322 are assembled to the pressing block 2 conveniently, and the connection stability between the second connection rods 322 and the pressing block 2 is improved.

In the example, the first connection rod 321 is of a triangular block structure, and the first connection rod 321 is provided with a first shaft hole 3214, a second shaft hole 3215, and a third shaft hole 3216 that are arranged in a triangle; where a first hinge pin 3217 is disposed in the first shaft hole 3214 in a penetrating manner, and the first connection rod 321 is pivoted with the base 1 by the first hinge pin 3217; a second hinge pin 3218 is disposed in the second shaft hole 3215 in a penetrating manner, and the first connection rod 321 is pivoted with the second corresponding adapter end 42 of the adapter push rod 4 by the second hinge pin 3218; and the first connection shaft 33 is arranged in the two second connection rods 322 in a penetrating manner, so as to be pivoted with the two second connection rods 322, and two ends of the first connection shaft 33 are arranged in the third shaft holes 3216 of the two first connection rods 321 in a penetrating manner respectively.

Two ends of the second connection rod 322 are provided with a fourth shaft hole 3221 and a fifth shaft hole 3222 separately. The first connection shaft 33 is disposed in the fourth shaft hole 3221 in a penetrating manner, and the second connection shaft 34 is disposed in the fifth shaft hole 3222 in a penetrating manner.

In order to facilitate assembly of the locking device and improve layout rationality, the base 1 includes support frames 11 disposed corresponding one-to-one to the two connection rod assemblies 32, and the first ends 3211 are pivoted with the corresponding support frames 11.

In the example, a tail end of the pressing block 2 is provided with a tail-end shaft hole 21, a mounting hinge pin 23 is disposed in the tail-end shaft hole 21 in a penetrating manner, and two ends of the mounting hinge pin 23 are pivoted with the two support frames 11 respectively. The pressing block 2 is pivoted with the two support frames 11 through the mounting hinge pin 23, so that the pressing block 2 is supported stably. A middle of the pressing block 2 is provided with a middle shaft hole 22, and the second connection shaft 34 is disposed the middle shaft hole 22 in a penetrating manner.

In some embodiment, the support frames 11 are of an inverted U-shaped structure; and the second adapter ends 42 of the adapter push rod 4 extend out of U-shaped openings of the corresponding support frames 11, so as to be pivoted with the second ends 3212 of the first corresponding connection rods 321. In other words, the first connection rods 321 of the two connection rod assemblies 32 are positioned on outer sides of the corresponding support frames 11 respectively. Compared with a case that the two first connection rods 321 are disposed between the two support frames 11, a length of the mounting hinge pin 23 of the pressing block 2 can be shortened, the overall structural strength can be improved, and the occupied space can be narrowed.

In some embodiment, connection reinforcing structures are disposed between the support frames 11 and the base 1, so that the connection stability between the support frame and the base is ensured, and the structural strength of the support frames 11 is improved.

In some embodiment, the base 1 includes a locating seat body 12 and a mounting seat body 13 connected with one side of the locating seat body 12, where an included angle is formed between the mounting seat body 13 and the locating seat body 12, and the included angle is an obtuse angle. The two support frames 11 are both fixedly disposed at the mounting seat body 13. In some embodiment, the driving source is fixedly arranged on one side, facing away from the pressing block 2, of the mounting seat body 13, and an axis of the driving source is perpendicular to the mounting seat body 13. In the example, the driving source is the air brake chamber 31, and in other words, the air brake chamber 31 is obliquely disposed on one side, facing away from the pressing block 2, of the mounting seat body 13. Compared with the prior art, a smaller space between the pressing block 2 and the mounting seat body 13 is occupied, and thus the layout of the member to be locked is not hindered.

Further, the mounting seat body 13 includes a first bearing end surface and a second bearing end surface that are oppositely disposed, the connection rod assemblies 32 are disposed on the first bearing end surface, and at least part of the driving source is disposed on the second bearing end surface.

Specifically, the mounting seat body 13 includes a bearing plate body, the first bearing end surface and the second bearing end surface are disposed on the bearing plate body, the bearing plate body is connected with the end portion of the locating seat body 12, and the included angle is formed between the bearing plate body and the locating seat body 12; and protecting plate bodies, two protecting plate bodies are provided, the two protecting plate bodies are arranged at two ends of the bearing plate body respectively, a mounting space is formed between the two protecting plate bodies, and at least part of the driving source is positioned in the mounting space.

The locating seat body 12 includes a first seat body, a second seat body, and a third seat body that are sequentially connected, included angles are formed between the first seat body and the mounting seat body as well as between the third seat body and the mounting seat body separately; and the first seat body and the third seat body are oppositely disposed, so as to delimit a weight reduction space among the first seat body, the second seat body, and the third seat body.

It can be understood that the mounting seat body 13 is provided with a through hole, and the push rod 311 of the air brake chamber 31 is disposed in the through hole in a penetrating manner, and extends and retracts in the through hole, so as to drive the pressing block 2 to rotate.

In order to reduce a weight and materials consumed, in the example, the locating seat body 12 is provided with a weight reduction groove 121.

n some embodiment, the base 1 is provided with a reinforcing structure, so that the structural strength of the base 1 is improved. Illustratively, the locating seat body 12 and the mounting seat body 13 are both provided with reinforcing structures.

In some embodiment, a mounting structure is provided on one side, facing away from the mounting seat body 13, of the locating seat body 12. The locating seat body 12 can be fixedly mounted on a battery swap base 200, etc. of a vehicle by means of the mounting structure, so that the adaptability is high.

Illustratively, a working process of the locking device in the example is as follows:
When extending outwards, the push rod 311 of the air brake chamber 31 is swing within an angle range of ±6°, so as to drive the adapter push rod 4 to drive the two first connection rods 321 to rotate about the first hinge pin 3217. Moreover, the first connection rods 321 drive the second connection rods 322 to rotate, and the second connection rods 322 drive the pressing block 2 to rotate about the mounting hinge pin 23 until a free end of the pressing block 2 presses against the member to be locked, so that the member to be locked is locked.

When retracting inwards, the push rod 311 of the air brake chamber 31 drives the adapter push rod 4 to drive the two first connection rods 321 to rotate about the first hinge pin 3217. Moreover, the first connection rods 321 drive the second connection rods 322 to rotate, and the second connection rods 322 drive the pressing block 2 to rotate about the mounting hinge pin 23 until the free end of the pressing block 2 disengages from the member to be locked, so that the member to be locked is unlocked.

A vehicle is further provided in the example. The vehicle includes the above locking device. By applying the above locking device, the vehicle does not depend on the air source in an advancing process, and the safety is higher.

In some embodiment, the vehicle further includes a battery 100 to be swapped and a battery swap base 200. In the example, the battery 100 to be swapped is a member to be locked. A driving source such as an air brake chamber 31 drives the pressing block 2 to rotate about a pivot shaft between the pressing block and a base 1, so that the pressing block 2 selectively presses against the battery 100 to be swapped against the battery swap base 200. Compared with the prior art, the locking device in the example does not depend on the air source, so that the risk of accidental loosening of the battery 100 to be swapped is significantly lowered, and the safety is higher.

It should be noted that what are described above are merely preferred examples of the disclosure and the technical principles applied. Those skilled in the art will appreciate that the disclosure is not limited to the specific examples herein, and that various obvious changes, readjustments, and substitutions can be made by those skilled in the art without departing from the scope of protection of the disclosure. Thus, although the disclosure is described in detail through the above examples, the disclosure is not limited to the above examples, but can also include more other equivalent examples without departing from the concept of the disclosure, and the scope of the disclosure is subject to the scope of the appended claims.

## Claims

1. A locking device, comprising:
a base (1);
a pressing block (2), wherein the pressing block (2) is pivoted with the base (1); and
a driving unit (3), wherein the driving unit comprises a driving source and a connection rod assembly (32), the driving source is fixedly disposed at the base (1), and the connection rod assembly (32) is connected between the pressing block (2) and the driving source; and the driving source drives the connection rod assembly (32) to move, so as to drive the pressing block (2) to rotate about a pivot shaft between the pressing block (2) and the base (1), so that the pressing block (2) selectively presses against or disengages from a member to be locked.

2. The locking device according to claim 1, wherein the driving source comprises an elastic member and an unlocking unit, the elastic member is connected with the connection rod assembly (32), and the unlocking unit is connected with the elastic member; and by means of an elastic restoring force of the elastic member, the connection rod assembly (32) drives the pressing block (2) to maintain a pressing force on the member to be locked, and the unlocking unit is configured to offset the pressing force of the elastic member and compress the elastic member, so that the pressing block (2) disengages from the member to be locked.

3. The locking device according to claim 1, wherein two connection rod assemblies (32) are provided, the two connection rod assemblies (32) are symmetrically disposed on two sides of the pressing block (2) respectively, and the driving source is connected with the two connection rod assemblies (32), so that the driving source drives the two connection rod assemblies (32) to act synchronously.

4. The locking device according to claim 3, wherein the locking device further comprises an adapter push rod (4), the adapter push rod (4) comprises a first adapter end (41) and second adapter ends (42) disposed corresponding one-to-one to the two connection rod assemblies (32), the first adapter end (41) is fixedly connected with an action end of the driving source, and the second adapter ends (42) are pivoted with the corresponding connection rod assemblies (32).

5. The locking device according to claim 4, wherein the adapter push rod (4) is of a U-shaped structure, the first adapter end (41) is disposed at a bottom end of the U-shaped structure, and the second adapter ends (42) are disposed at tops of two ends of an opening of the U-shaped structure.

6. The locking device according to claim 4, wherein the connection rod assembly (32) comprises:
a first connection rod (321), wherein the first connection rod (321) comprises a first end (3211), a second end (3212), and a third end (3213) that are sequentially disposed along a triangular track, the first end (3211) is pivoted with the base (1), and the second end (3212) is pivoted with the second corresponding adapter end (42) ; and
a second connection rod (322), wherein one end of the second connection rod (322) is pivoted with the third end (3213), and the other end of the second connection rod is pivoted with the pressing block (2).

7. The locking device according to claim 6, wherein the driving unit (3) further comprises a first connection shaft (33), and two ends of the first connection shaft (33) penetrate one ends of the second connection rods (322) of the two connection rod assemblies (32) and then are pivoted with the first connection rods (321) of the two connection rod assemblies (32) respectively.

8. The locking device according to claim 6, wherein the base (1) comprises support frames (11) disposed corresponding one-to-one to the two connection rod assemblies (32), the first ends (3211) are pivoted with the corresponding support frames (11), and the support frames (11) are of an inverted U-shaped structure; and the second adapter ends (42) of the adapter push rod (4) extend out of U-shaped openings of the corresponding support frames (11), so as to be pivoted with the second ends (3212) of the first corresponding connection rods (321).

9. The locking device according to claim 1, wherein the base (1) comprises a locating seat body (12) and a mounting seat body (13) connected with one side of the locating seat body (12), an included angle is formed between the locating seat body (12) and the mounting seat body (13), and the included angle is an obtuse angle; and
the driving source is fixedly disposed on one side, facing away from the pressing block (2), of the mounting seat body (13), and an axis of the driving source is perpendicular to the mounting seat body (13).

10. The locking device as claims in claim 4, wherein the adapter push rod (4) comprises a first rod body, a second rod body, and a third rod body that are sequentially connected, and the first rod body and the third rod body are oppositely disposed; and
the first adapter end (41) is disposed in a middle of the second rod body, and the two second adapter ends (42) are disposed at one end, away from the second rod body, of the first rod body, and one end, away from the second rod body, of the third rod body separately.

11. The locking device according to claim 10, wherein the first rod body, the second rod body, and the third rod body are of an integrally-formed U-shaped structure.

12. The locking device according to claim 6, wherein the pressing block (2) is provided with a middle shaft hole (22), and the driving unit (3) further comprises:
a second connection shaft (34), wherein the second connection shaft (34) is disposed in the middle shaft hole (22) in a penetrating manner, and two ends of the second connection shaft (34) are pivoted with the second connection rods (322) of the two connection rod assemblies (32) respectively.

13. The locking device according to claim 8, wherein the pressing block (2) is provided with a tail-end shaft hole (21), a mounting hinge pin (23) is disposed in the tail-end shaft hole (21) in a penetrating manner, and two ends of the mounting hinge pin (23) are pivoted to the two support frames (11) respectively.

14. The locking device according to claim 9, wherein the driving source comprises a push rod (311), the push rod (311) is telescopically disposed, the push rod (311) is in driving connection with the connection rod assemblies (32), and the push rod (311) drives the connection rod assemblies (32) to move; and
the mounting seat body (13) is provided with a through hole, and at least part of the push rod (311) penetrates the through hole, so as to be connected with the connection rod assemblies (32).

15. The locking device according to claim 1, wherein the base (1) comprises:
a locating seat body (12); and
a mounting seat body (13), wherein the mounting seat body is disposed at an end portion of the locating seat body (12), an included angle is formed between the mounting seat body (13) and the locating seat body (12), and the driving unit (3) is disposed on the mounting seat body (13).

16. The locking device according to claim 15, wherein the driving unit (3) comprises the driving source, and the driving source is in driving connection with the connection rod assemblies (32); and
the mounting seat body (13) comprises a first bearing end surface and a second bearing end surface that are oppositely disposed, the connection rod assemblies (32) are disposed on the first bearing end surface, and at least part of the driving source is disposed on the second bearing end surface.

17. The locking device according to claim 16, wherein the driving source comprises a push rod (311), the push rod (311) is telescopically disposed, the push rod (311) is in driving connection with the connection rod assemblies (32), and the push rod (311) drives the connection rod assemblies (32) to move; and
the mounting seat body (13) is provided with a through hole, and at least part of the push rod (311) penetrates the through hole, so as to be connected with the connection rod assemblies (32).

18. The locking device according to claim 16, wherein the mounting seat body (13) comprises:
a bearing plate body, wherein the first bearing end surface and the second bearing end surface are disposed on the bearing plate body, the bearing plate body is connected with the end portion of the locating seat body (12), and the included angle is formed between the bearing plate body and the locating seat body (12); and
protecting plate bodies, wherein two protecting plate bodies are provided, the two protecting plate bodies are arranged at two ends of the bearing plate body respectively, a mounting space is formed between the two protecting plate bodies, and at least part of the driving source is positioned in the mounting space.

19. The locking device according to claim 16, wherein the locating seat body (12) comprises:
a first seat body, a second seat body, and a third seat body that are sequentially connected, and included angles are formed between the first seat body and the mounting seat body as well as between the third seat body and the mounting seat body separately; and
the first seat body and the third seat body are oppositely disposed, so as to delimit a weight reduction space among the first seat body, the second seat body, and the third seat body.

20. A vehicle, comprising the locking device according to any one of claims 1-19; wherein the vehicle further comprises a battery (100) to be swapped and a battery swap base (200); and a driving source drives a pressing block (2) to rotate about a pivot shaft between the pressing block and a base (1), so that the pressing block (2) selectively presses against the battery (100) to be swapped against the battery swap base (200).
